# EUROPEAN PATENT APPLICATION

(11) **EP 2 204 558 A2**
(43) Date of publication of application: **07.07.2010**
(21) Application number: 09170025.2
(22) Date of filing: 11.09.2009
(51) Int. Cl.: F02B 3/02, F02B 33/32

(54) **Internal combustion engine having independent gas supply with no compression stroke**

(30) Priority: 30.12.2008 TW 97151494
(71) Applicant: LIO Pang-Chian, Miaoli County, Taiwan (CN)
(72) Inventor: LIO Pang-Chian, Miaoli County, Taiwan (CN)
(74) Representative: 2K Patentanwälte Blasberg Kewitz & Reichel

(57) **Abstract**

An internal combustion engine (1,2) having an independent gas supply with no compression stroke is provided. The internal combustion engine (1,2) includes a body (11,21), an input unit, an output unit, and an exhaust unit. The body (11,21) has at least one combustion chamber (111,213). The input unit is connected to the combustion chamber (111,213), for inputting a high-pressure fuel in the combustion chamber (111,213) and producing a predetermined pressure inside the combustion chamber (111,213). The output unit is connected to the combustion chamber (111,213), for outputting power generated by combustion of the high-pressure fuel. The exhaust unit is connected to the combustion chamber (111,213), for discharging an exhaust gas generated due to the combustion of the high-pressure fuel. The predetermined pressure is directly produced inside the combustion chamber (111,213) by inputting the high-pressure fuel in the combustion chamber (111,213), and then a combustion stroke is performed. The internal combustion engine (1,2) of the present invention does not need a complicated valve system but achieves desirable gas-intake efficiency.

## Description

### BACKGROUND OF THE INVENTION

### 1. Field of the Invention

The present invention relates to an internal combustion engine, and more particularly to an internal combustion engine having an independent gas supply with no compression stroke.

### 2. Description of the Related Art

Generally, a reciprocating piston engine is most commonly used and has been widely applied in many aspects (for example, in various types of vehicles). The reciprocating piston engine is mainly classified into two types: 2-stroke and 4-stroke. However, in the reciprocating piston engine, no matter being a 2-stroke or 4-stroke engine, intake, compression, combustion, and exhaust steps must be performed, and the piston has to stop and reverse its direction accordingly, so that a shaft in the 4-stroke engine reverses four times for each output and a shaft in the 2-stroke engine reverses twice for each output. The 2-stroke and 4-stroke engines need quite complicated valve systems, in order to input a fuel, compress for supercharging, ignite for combustion, and discharge exhaust gas at a proper time.

For the conventional 2-stroke or 4-stroke engine, one or two reversions need to be performed during each output, so the operation of the engine is relatively not smooth and the rotational speed thereof is difficult to be increased. In addition, in the prior art, not only the valve system is complicated, but an undesirable gas-intake efficiency may also be resulted from the cooperation of the gas-intake time and the valve system. For example, a desired gas-intake amount is 500 c.c., while an actual gas-intake amount may only be 475 c.c. or even lower, so that the performance of the engine is low, and a predetermined power output is unable to be achieved.

Consequently, there is an existing need for an internal combustion engine having an independent gas supply with no compression stroke to solve the above-mentioned problems.

### SUMMARY OF THE INVENTION

Accordingly, the present invention is directed to an internal combustion engine having an independent gas supply with no compression stroke. The internal combustion engine includes a body, an input unit, an output unit, and an exhaust unit. The body has at least one combustion chamber. The input unit is connected to the combustion chamber, for inputting a high-pressure fuel in the combustion chamber and producing a predetermined pressure inside the combustion chamber. The output unit is connected to the combustion chamber, for outputting power generated by combustion of the high-pressure fuel. The exhaust unit is connected to the combustion chamber, for discharging an exhaust gas generated due to the combustion of the high-pressure fuel.

In the internal combustion engine having an independent gas supply with no compression stroke provided by the present invention, the predetermined pressure is directly produced inside the combustion chamber by inputting the high-pressure fuel in the combustion chamber, and then a combustion stroke is performed, so that the engine does not need to go through strokes such as intake, compression, combustion, and exhaust as in a conventional one. Therefore, the internal combustion engine of the present invention does not need a complicated valve system but achieves desirable gas-intake efficiency. As each output only requires combustion and exhaust strokes, the operation of the engine is relatively smooth and the rotational speed of the engine may be largely increased. Moreover, as an independent gas supply is utilized, the limit of the conventional gas-intake efficiency (gas-intake time and pipeline valve configuration) is eliminated, so that a corresponding capacity needed inside the combustion chamber at the time of the combustion stroke may be controlled depending on the demand of an output amount of the power.

### BRIEF DESCRIPTION OF THE DRAWINGS

FIG. 1 is a schematic view of an internal combustion engine having an independent gas supply with no compression stroke according to a first embodiment of the present invention; and
FIG. 2 is a schematic view of an internal combustion engine having an independent gas supply with no compression stroke according to a second embodiment of the present invention.

### DETAILED DESCRIPTION OF THE INVENTION

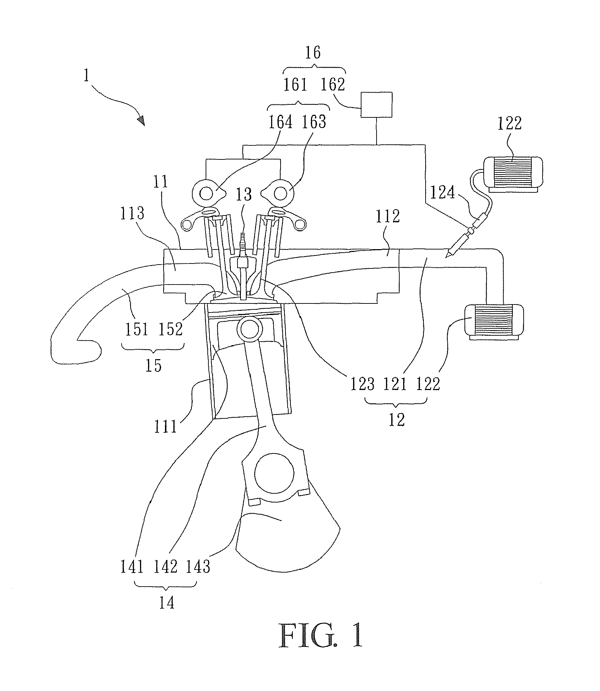

FIG. 1 is a schematic view of an internal combustion engine having an independent gas supply with no compression stroke according to a first embodiment of the present invention. In this embodiment, the internal combustion engine 1 having an independent gas supply with no compression stroke includes a body 11, an input unit 12, an ignition unit 13, an output unit 14, an exhaust unit 15, and a timing unit 16.

The body 11 has at least one combustion chamber 111, an inlet channel 112, and an outlet channel 113. The input unit 12 has an input manifold 121, at least one supercharging device 122, a first free valve 123, and a high-pressure nozzle 124. The input unit 12 is used for inputting a high-pressure fuel in the combustion chamber 111 and producing a predetermined pressure inside the combustion chamber 111. In this embodiment, the inlet channel 112 and the outlet channel 113 are in communication with the combustion chamber 111. The input manifold 121 is connected to the inlet channel 112. The first free valve 123 is used for opening or closing the inlet channel 112. When the first free valve 123 opens the inlet channel 112, the high-pressure fuel is input in the combustion chamber 111 through the input manifold 121.

The supercharging device 122 is used for increasing the pressure of the high-pressure fuel, so that the high-pressure fuel is guided by the input manifold 121 into the combustion chamber 111 and the pressure inside the combustion chamber 111 reaches the predetermined pressure. The supercharging device 122 may be a compressor. Preferably, the high-pressure fuel is a petroleum fuel, a natural gas, or a biofuel, and according to different applications, the petroleum fuel may be gasoline, diesel oil, or a petroleum/air mixed fuel. If the high-pressure fuel is gasoline, the predetermined pressure is preferably 8 to 20 bars, and if the high-pressure fuel is diesel oil, the predetermined pressure is preferably 20 to 40 bars.

In this embodiment, the internal combustion engine 1 having an independent gas supply with no compression stroke includes two supercharging devices 122, respectively connected to the input manifold 121 and the high-pressure nozzle 124. One of the supercharging devices 122 is used for supercharging the air to enter the combustion chamber 111 through the input manifold 121, and the other is used for supercharging the petroleum to be atomized and injected into the input manifold 121, so that the petroleum is mixed with the high-pressure air and together flows into the combustion chamber 111.

The ignition unit 13 is fixed to the body 11, and has one end extending in the combustion chamber 111 to ignite the high-pressure fuel at a proper time. The ignition unit 13 is a spark plug. In this embodiment, the output unit 14 is connected to the combustion chamber 111, and has a piston 141, a connecting rod 142, and a crank shaft 143, for outputting power generated by combustion of the high-pressure fuel. The piston 141 is received in the combustion chamber 111, the connecting rod 142 is connected to the piston 141, and the crank shaft 143 is connected to the connecting rod 142. It should be noted that, in other applications, the internal combustion engine 1 having an independent gas supply with no compression stroke may not include the ignition unit 13 depending on characteristics of the used high-pressure fuel (for example, the high-pressure fuel is diesel oil).

The exhaust unit 15 is connected to the combustion chamber 111, and has an output manifold 151 and a second free valve 152, for discharging an exhaust gas generated due to the combustion of the high-pressure fuel. The output manifold 151 is connected to the outlet channel 113. The second free valve 152 is used for opening or closing the outlet channel 113.

The first free valve 123 opens the inlet channel 112 before the pressure inside the combustion chamber 11 reaches the predetermined pressure and the second free valve 152 closes the outlet channel 113 (that is, an intake stroke). The first free valve 123 closes the inlet channel 112 when the pressure inside the combustion chamber 111 reaches the predetermined pressure and the second free valve 152 closes the outlet channel 113. When the piston 141 is lowered to a predetermined position, the ignition unit 13 ignites to start the combustion of the high-pressure fuel (that is, a combustion stroke). The second free valve 152 opens the outlet channel 113 after the combustion of the high-pressure fuel, and the first free valve 123 closes the inlet channel 112 to discharge the exhaust gas generated during the combustion (that is, an exhaust stroke). After the exhaust gas is completely discharged, when the piston 141 is lowered to another predetermined position, a next intake stroke is performed.

The combustion of the high-pressure fuel in the combustion chamber 111 generates power for actuating the piston 141. Thereby, the piston 141 drives the crank shaft 143 through the connecting rod 142, so as to transfer the power to other means or devices connected to the crank shaft 143. In addition, the piston 141 passes a bottom dead center and reverses to move upward. The exhaust gas generated due to the combustion of the high-pressure fuel in the combustion chamber 111 is pushed by the piston 141 moving upward and discharged out of the combustion chamber 111 through the output manifold 151 when the outlet channel 113 is opened.

The timing unit 16 is used for controlling the time that the first free valve 123 and the second free valve 152 close or open the inlet channel 112 and the outlet channel 113. In this embodiment, the timing unit 16 has a cam shaft 161 and a control device 162. The cam shaft 161 has at least two cam structures 163 and 164, respectively in contact with the first free valve 123 and the second free valve 152. The control device 162 is used for controlling a rotational speed of the cam shaft 161, so as to control the time that the first free valve 123 and the second free valve 152 close or open the inlet channel 112 and the outlet channel 113, and control the time that the high-pressure nozzle 124 atomizes and injects the petroleum into the input manifold 121, thereby enabling the high-pressure fuel to enter the combustion chamber 111 at a proper time.

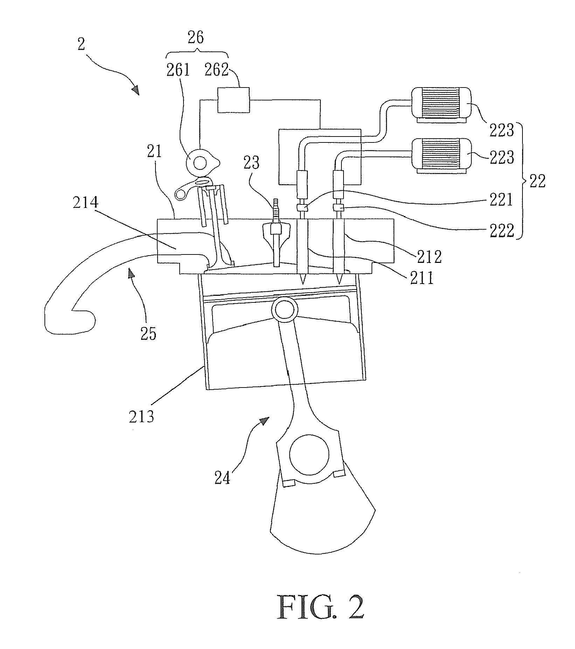

FIG. 2 is a schematic view of an internal combustion engine having an independent gas supply with no compression stroke according to a second embodiment of the present invention. The internal combustion engine 2 having an independent gas supply with no compression stroke includes a body 21, an input unit 22, an ignition unit 23, an output unit 24, an exhaust unit 25, and a timing unit 26. In the second embodiment, the body 21 includes two inlet channels 211 and 212. The input unit 22 includes a gas delivery member 221 and a fuel delivery member 222. A cam shaft of the timing unit 26 only has a cam structure 261. The gas delivery member 221 and the fuel delivery member 222 are disposed in the inlet channels 211 and 212, respectively. Air and petroleum are supercharged by two supercharging devices 223 of the input unit 22 and guided into a combustion chamber 213 of the body 21, respectively. Preferably, the gas delivery member 221 and the fuel delivery member 222 are electromagnetic-valve high-pressure nozzles.

A control device 262 of the timing unit 26 is used for controlling the cam structure 261 to close or open the outlet channel 214 of the body 21, so as to control the time of closing or opening the outlet channel 214, and also used for controlling electromagnetic valves in the gas delivery member 221 and the fuel delivery member 222 at the same time, so as to control the time of closing or opening the gas delivery member 221 and the fuel delivery member 222. Similarly, in other applications, the internal combustion engine 2 having an independent gas supply with no compression stroke may not include the ignition unit 23 depending on characteristics of the used high-pressure fuel ( for example, the high-pressure fuel is diesel oil). The rest of the means in the second embodiment are substantially the same as those in the internal combustion engine 1 having an independent gas supply with no compression stroke in FIG. 1, so the details thereof will not be described herein again.

In the internal combustion engine having an independent gas supply with no compression stroke provided by the present invention, the predetermined pressure is directly produced inside the combustion chamber by inputting the high-pressure fuel in the combustion chamber, and then a combustion stroke is performed, so that the engine does not need to go through strokes such as intake, compression, combustion, and exhaust as in a conventional one. Therefore, the internal combustion engine of the present invention does not need a complicated valve system but achieves desirable gas-intake efficiency. As each output only requires combustion and exhaust strokes, the operation of the engine is relatively smooth and the rotational speed of the engine may be largely increased.

Moreover, as an independent gas supply is utilized, the limit of the conventional gas-intake efficiency (gas-intake time and pipeline valve configuration) is eliminated, so that a corresponding capacity needed inside the combustion chamber at the time of the combustion stroke may be controlled depending on the demand of an output amount of the power. When the piston is lowered to a predetermined position and the capacity inside the combustion chamber meets the demand of a predetermined power output, ignition is carried out to start the combustion stroke. That is, for the internal combustion engine of the present invention, under permissive conditions (the lowest condition is to maintain a stable operation of the engine, while the highest condition is to ensure a sufficient combustion time and a beneficial moment), the capacity inside the combustion chamber may be changed. In consideration of a high power output or economical and environmental power output, a compression ratio (i.e., a required combustion capacity and a corresponding predetermined pressure) is controlled to obtain the desired power output.

While the embodiments of the present invention have been illustrated and described, various modifications and improvements can be made by those skilled in the art. The embodiments of the present invention are therefore described in an illustrative but not restrictive sense. It is intended that the present invention is not limited to the particular forms as illustrated, and that all modifications that maintain the spirit and scope of the present invention are within the scope defined in the appended claims.

## Claims

1. An internal combustion engine (1, 2) having an independent gas supply with no compression stroke, **characterized in** comprising:
a body (11, 21), having at least one combustion chamber (111, 213);
an input unit (12, 22), connected to the combustion chamber (111, 213), for inputting a high-pressure fuel in the combustion chamber (111, 213) and producing a predetermined pressure inside the combustion chamber (111, 213);
an output unit (14, 24), connected to the combustion chamber (111, 213), for outputting power generated by combustion of the high-pressure fuel; and
an exhaust unit (15, 25), connected to the combustion chamber (111, 213), for discharging an exhaust gas generated due to the combustion of the high-pressure fuel.

2. The internal combustion engine (1, 2) according to claim 1, wherein the high-pressure fuel is a petroleum fuel, a natural gas, a biofuel, or a petroleum/air mixed fuel.

3. The internal combustion engine (1, 2) according to claim 2, wherein the petroleum fuel is gasoline and the predetermined pressure is 8 to 20 bars.

4. The internal combustion engine (1, 2) according to claim 2, wherein the petroleum fuel is diesel oil and the predetermined pressure is 20 to 40 bars.

5. The internal combustion engine (1, 2) according to claim 1, wherein the input unit (12, 22) further comprises at least one supercharging device (122, 223), for increasing a pressure of the high-pressure fuel to be input in the combustion chamber (111, 213) and raising the pressure inside the combustion chamber (111, 213) to reach the predetermined pressure.

6. The internal combustion engine (1, 2) according to claim 2, further comprising an ignition unit (13, 23), fixed to the body (11, 21) and having one end extending in the combustion chamber (111, 213).

7. The internal combustion engine (1, 2) according to claim 1, wherein the output unit (14, 24) comprises a piston (141), a connecting rod (142) and a crank shaft (143), the piston (141) is received in the combustion chamber (111, 213), the connecting rod (142) is connected to the piston (141), and the crank shaft (143) is connected to the connecting rod (142).

8. The internal combustion engine (1, 2) according to claim 1, wherein the body (11, 21) further comprises at least one inlet channel (112, 211, 212) and an outlet channel (113, 214), the inlet channel (112, 211, 212) is in communication with the combustion chamber (111, 213) and the high-pressure fuel, and the outlet channel (113, 214) is in communication with the combustion chamber (111, 213) and an external portion of the body (11, 21).

9. The internal combustion engine (1, 2) according to claim 8, wherein the input unit (12, 22) further comprises an input manifold (121), the exhaust unit (15, 25) further comprises an output manifold (151), the input manifold (121) is connected to the inlet channel (112, 211, 212), and the output manifold (151) is connected to the outlet channel (113, 214).

10. The internal combustion engine (1, 2) according to claim 9, wherein the input unit (12, 22) further comprises a first free valve (123), the exhaust unit (15, 25) further comprises a second free valve (152), the first free valve (123) opens the inlet channel (112, 211, 212) before the pressure inside the combustion chamber (111, 213) reaches the predetermined pressure and the second free valve (152) closes the outlet channel (113, 214), the first free valve (123) closes the inlet channel (112, 211, 212) when the pressure inside the combustion chamber (111, 213) reaches the predetermined pressure and the second free valve (152) closes the outlet channel (113, 214), and the second free valve (152) opens the outlet channel (113, 214) after the combustion of the high-pressure fuel and the first free valve (123) closes the inlet channel (112, 211, 212).

11. The internal combustion engine (1, 2) according to claim 10, further comprising a timing unit (16, 26), connected to the first free valve (123) and the second free valve (152), for controlling the time that the first free valve (123) and the second free valve (152) close or open the inlet channel (112, 211, 212) and the outlet channel (113, 214).

12. The internal combustion engine (1, 2) according to claim 11, wherein the timing unit (16, 26) comprises a cam shaft (161), the cam shaft (161) has at least two cam structures (163, 164, 261), and the cam structures (163, 164, 261) contact the first free valve (123) and the second free valve (152).

13. The internal combustion engine (1, 2) according to claim 12, wherein the timing unit (16, 26) further comprises a control device (162, 262), for controlling a rotational speed of the cam shaft (161), so as to control the time that the first free valve (123) and the second free valve (152) close or open the inlet channel (112, 211, 212) and the outlet channel (113,214).

14. The internal combustion engine (1, 2) according to claim 1, wherein the body (11, 21) comprises two inlet channels (112, 211, 212), the input unit (12, 22) comprises a gas delivery member (221) and a fuel delivery member (222), and the gas delivery member (221) and the fuel delivery member (222) are disposed in the inlet channels (112, 211, 212), respectively.

15. The internal combustion engine (1, 2) according to claim 14, wherein the gas delivery member (221) and the fuel delivery member (222) are electromagnetic-valve high-pressure nozzles.
